# EUROPÄISCHE PATENTSCHRIFT

(11) **EP 1 987 721 B1**
(45) Veröffentlichungstag und Bekanntmachung des Hinweises auf die Patenterteilung: **21.12.2011**
(21) Anmeldenummer: 08008448.6
(22) Anmeldetag: 05.05.2008
(51) Int. Cl.: A22C 11/12, B65H 75/18

(54) **Clipspule mit Transponder**
Clip coil with transponder
Bobine à clip dotée d'un transpondeur

(30) Priorität: 04.05.2007 DE 202007006428 U
(43) Veröffentlichungstag der Anmeldung: 05.11.2008
(73) Patentinhaber: Poly-clip System GmbH & Co. KG, 60489 Frankfurt am Main (DE)
(72) Erfinder: Hein, Klaus, 63688 Gedern (DE)
(74) Vertreter: Eisenführ, Speiser & Partner

(56) Entgegenhaltungen:
- EP-A- 1 266 830
- EP-A- 1 695 913
- WO-A-2004/106204
- DE-A1- 10 115 200
- DE-C1- 10 131 807
- NL-A- 9 400 392

## Beschreibung

Die vorliegende Erfindung betrifft eine Spule zum Speichern und Abgeben eines auf der Spule aufgewickelten Wickelgutes in einer Clipmaschine, insbesondere einer Wurstclipmaschine, gemäß dem Oberbegriff des Anspruchs 1.

Insbesondere betrifft die Erfindung eine Spule zum Speichern und Abgeben eines auf der Spule aufgewickelten Wickelgutes, insbesondere eines Clipstrangs, mit einem Spulenkörper, der eine Nabe und an den axialen Stirnenden der Nabe jeweils angeordnete Seitenwände aufweist, die über die Außenumfangsoberfläche der Nabe in radialer Richtung überstehen. Dabei dient der von den zueinander weisenden Flächen der Seitenwände und der Nabe definierte und um die Nabe umlaufende Speicherraum zur Aufnahme des Wickelgutes.

In der Praxis ist es bekannt, dass beispielsweise bei der Herstellung von Wurstprodukten das Wurstbrät von einer Füllmaschine über ein Füllrohr einer Clipmaschine zugeführt wird. In der Clipmaschine wird das Füllgut in ein durch einen ersten Clip einseitig verschlossenes, schlauchförmiges Verpackungshüllenmaterial abgefüllt und das schlauchförmige Verpackungshüllenmaterial durch Setzen eines zweiten Clips verschlossen. Die Verschließwerkzeuge umfassen dabei paarweise jeweils einen Stempel und eine Matrize, zwischen welchen der Clip während des Verschließens bis zum Erreichen des minimalen Abstandes der Verschließwerkzeuge umgeformt wird. Nach dem Verschließen werden die Verschließwerkzeuge in ihrer Ausgangs- oder Öffnungsstellung zurückbewegt. Anschließend wird das Verpackungshüllenmaterials des so entstandenen Wurstprodukts von dem Vorrat des übrigen Verpackungshüllenmaterials abgetrennt und das so fertiggestellte Wurstprodukt aus der Clipmaschine ausgetragen.

An die Qualität eines solchen Verschlusses werden hohe Anforderungen gestellt. Einerseits darf er nicht so fest sein, dass die Verpackungshülle beim Verschließen beschädigt wird. Andererseits muss der Verschluss aber ausreichend fest und dicht sein, so dass beispielsweise bei einem nachfolgenden weiteren Bearbeitungsschritt des verschlossenen Wurstprodukts, wie beispielsweise ein Garen, Räuchern usw. dieser nicht von dem Verpackungshüllenmaterial abrutscht und/oder Wurstbrät aus dem Verpackungshüllenmaterial austritt.

Wenn die Clipmaschine für eine Vielzahl von verschiedenen Wurstprodukten mit einer Reihe an unterschiedlichen Verpackungshüllenmaterialien eingesetzt werden soll, kommen verschiedene Clips zum Einsatz, die sich sowohl in ihrem Material als auch in ihren Abmessungen (Schenkellänge und Materialstärke) unterscheiden. Daher kommen jeweils auf den Typ des verwendeten Clips entsprechend abgestimmte Verschließwerkzeuge zum Einsatz, um eine genau definierte Verformung des Clips beim Verschließen zu erreichen.

Damit der Produktionsprozess bei hohen Taktraten ohne Unterbrechung durchgeführt werden kann, muss eine große Zahl an Clips an der Clipmaschine bereitgestellt werden. Dies geschieht in der Praxis dadurch, dass Clips in Form eines wellenförmig geprägten, auf einer Spule aufgewickelten Metallstrang, bei dem die Clips jeweils an Ihren Schenkelenden einstückig zusammenhängen, bereitgestellt werden. Der jeweils benötigte Clip wird im Bedarfsfall von dem Clipwickel mittels der vorstehend erwähnten Verschließwerkzeuge abgetrennt und verschlossen.

Da die Verschließwerkzeuge und die Clips in ihrer Größe entsprechend aufeinander abgestimmt sind, werden bei einem Wechsel der Clipgröße, um beispielsweise Wurstprodukte mit einem anderen Kaliber herstellen zu können, auch die Verschließwerkzeuge ausgetauscht. Um die Abstimmung zu vereinfachen und Fehlbedienungen auszuschließen, sind die Verschließwerkzeuge und die den aufgewickelten Clipstrang tragende Spule mit Etiketten versehen, auf denen Informationen zum Werkzeug bzw. zum Clip vermerkt sind.

Ein solches System ist in der DE 10 2005 033 437 beschrieben. Die Spule, auf die ein entsprechender Clipstrang aufgewickelt ist, ist mit einem RFID-Etikett versehen. Auf diesem Etikett sind Clipinformationen, wie beispielsweise die Clipgröße, das Clipmaterial usw., gespeichert. Diese Informationen können von einem an der Clipmaschine vorgesehenen Lesegerät ausgelesen und an die Steuerung der Clipmaschine weitergeleitet werden. Auf den zu der Clipmaschine gehörenden Verschließwerkzeugen sind ebenfalls RFID-Etiketten angebracht, die Informationen über das Verschließwerkzeug, insbesondere hinsichtlich des durch dieses Werkzeug verarbeitbaren Clip enthalten. Auch diese können mittels eines an der Clipmaschine vorgesehenen Lesegerätes ausgelesen und an die Steuerung weitergeleitet werden. Die Steuerung, genauer eine Vergleichseinrichtung der Steuerung, vergleicht die ausgelesenen Informationen der Schließwerkzeuge sowie des Clipvorrats und gibt ein Kompatibilitätssignal an die Steuerung der Clipmaschine ab. Bei Feststellung der Kompatibilität von Clip und Werkzeug wird ein Startsignal ausgegeben und der Produktionsprozess kann beginnen.

Aus der DE Patentanmeldung 101 15 200 ist eine Spule bekannt, die aus einem im Wesentlichen zylindrischen oder hohlzylindrischen Kern besteht, der an seinen Enden Flansche aufweist. An der Spule ist ein Datenträger in Form eines Transponders angeordnet, der an der Außenseite der Flansche oder im Inneren des Kerns angebracht sein kann.

In der WO2004/106204 ist eine Wickelhülse offenbart, auf der ein bahnförmiges Fabrikat aufgewickelt werden kann. Die Wickelhülse weist einen hohlzylindrischen Hülsenkörper auf, in den ein hülsenförmiges Halteelement, an dessen Stirnenden radial vorstehende Bünde angeformt sind, deren Außendurchmesser dem Innendurchmesser des Hülsenkörpers entspricht, eingesteckt werden kann. Das Halteelement weist auf seiner Oberfläche weiterhin einen Steg auf, dessen Höhe der Höhe der Bünde entsprechen. Dieser Steg umschließt eine Mulde, in der ein Datenträger, wie ein RF-Tag, untergebracht werden kann.

Diese bekannten Spulen weisen aber Nachteile auf. So kann ein auf den Spulenkörper appliziertes RFID-Etikett sehr leicht entfernt oder durch bewegte Maschinenteile beschädigt werden, wodurch ein Auslesen der Informationen erschwert oder verhindert wird. Weiterhin kann durch eine fehlende Abschirmung des RFID-Etiketts das Auslesen der Informationen erschwert oder die Informationen verfälscht werden.

Ausgehend davon ist es Aufgabe der vorliegenden Erfindung, eine Spule bereit zu stellen, welche die vorgenannten Nachteile überwindet. Es ist weiterhin Aufgabe der vorliegenden Erfindung, eine Spule bereit zu stellen, bei der durch eine geeignete Abschirmung die Funktionssicherheit eines Transponders weiter verbessert wird.

Die vorstehende Aufgabe wird durch die Merkmale des Anspruchs 1 gelöst. In den sich daran anschließenden Ansprüchen 2 bis 13 finden sich vorteilhafte Ausgestaltungen der erfindungsgemäßen Spule.

Insbesondere wird eine Spule zum Speichern und Abgeben eines auf der Spule aufgewickelten Wickelgutes, insbesondere eines Clipstrangs, vorgeschlagen, wobei die Spule einen Spulenkörper besitzt, der eine Nabe und an den axialen Stirnenden der Nabe jeweils angeordnete Seitenwände aufweist, die über die Außenumfangsoberfläche der Nabe in radialer Richtung überstehen. Dabei dient der von den zueinander weisenden Flächen der Seitenwände und der Nabe definierte und um die Nabe umlaufende Speicherraum zur Aufnahme des Wickelgutes. Bei der erfindungsgemäßen Spule wird weiterhin vorgeschlagen, dass der Spulenkörper an einer von dem Speicherraum für das Wickelgut wegweisenden Fläche der Nabe wenigstens einen dielektrischen Bereich zur Aufnahme mindestens eines Transponders aufweist.

Durch das Anbringen des Transponders auf einer von dem Speicherraum für das Wickelgut wegweisenden Fläche der Nabe ist der Transponder vor Beschädigungen durch das Wickelgut während des Aufwickeln des Wickelgutes auf die Spule oder des Abwickelns des Wickelgutes von der Spule geschützt. Weiterhin schützt die dielektrische Ausgestaltung des Befestigungsbereiches für den Transponder diesen vor Einflüssen des Wickelgutes, die die Signalübertragung stören können, wenn das Wickelgut beispielsweise aus einem metallischen Werkstoff besteht.

Bei der eifindungsgemäßen Spule ist zur Schaffung eines dielektrischen Bereiches Nabe doppelwandig ausgebildet. Auf diese Weise wird ein Hohlraum in der Nabenwandung geschaffen, in dem der Transponder vor jeder Art mechanischer und/oder elektrischer Beeinflussung geschützt ist.

Ist dabei der dielektrische Bereich auf der der Nabenachse näheren Umfangswand der doppelwandigen Nabe vorgesehen, so kann auf diese Weise der Transponder vor den Einflüssen der üblicherweise metallischen Verschlussmittel geschützt werden. Hierbei ist es weiterhin vorteilhaft, wenn der dielektrische Bereich auf der von der Nabenachse wegweisenden Fläche der der Nabenachse näheren Umfangswand der doppelwandigen Nabe vorgesehen ist. Mit anderen Worten ist der dielektrische Bereich auf der Außenumfangsfläche der ersten Nabenwandung der doppelwandigen Nabe angeordnet. Selbstverständlich besteht auch die Möglichkeit, dass der Transponder an der Innenumfangsfläche der zweiten Nabenwandung der doppelwandigen Nabe anordenbar ist. Letzteres ist insbesondere dann von Vorteil, wenn die Aufnahme der Maschine, an der die Spule verwendet wird, aus einem metallischen Werkstoff hergestellt ist.

Die Doppelwandigkeit der Nabe zur Ausbildung des dielektrischen Bereichs kann auf verschiedene Weise realisiert werden. So ist es beispielsweise vorteilhaft, wenn zur Ausbildung der Doppelwandigkeit der Nabe beabstandet zur Außenumfangsoberfläche der Nabe auf diese teilkreisförmige Schalen angeordnet sind, welche die Nabe zumindest annährend vollständig umschließen. So kann mit geringem Produktionsaufwand nach Fertigstellung einer Standardspule ohne dielektrischen Bereich durch Anordnung der teilkreisförmigen Schalen auf der Nabe eine Spule mit einem dielektrischen Bereich hergestellt werden.

Ein dielektrischer Bereich kann auf verschiedene Weise geschaffen werden. In einer vorteilhaften Ausgestaltung der erfindungsgemäßen Spule ist er durch wenigstens eine abschnittsweise vorgesehene Materialverdickung gebildet. Die Schaffung dieser Materialverdickung lässt sich mit einfachen Mitteln in den Herstellungsprozess des Spulenkörpers integrieren. Eine weitere Möglichkeit bestehe darin dass der mindestens eine dielektrische Bereich durch eine an der von dem Wickelgut wegweisenden Fläche der Nabe bzw. der Innenumfangsfläche der Nabe vorgesehenen Ausnehmung gebildet ist. Eine derartige Lösung ist insbesondere dann vorteilhaft, wenn die Aufnahme, auf der die Spule in einer Maschine angeordnet wird, aus einem Werkstoff hergestellt ist, der keinen Einfluss auf die Funktions- bzw. Arbeitsweise des Transponders hat. Insbesondere ist dies der Fall, wenn für die Aufnahme ein Kunststoff verwendet wird.

Beim Aufwickeln des Wickelgutes auf der Spule und beim Abwickeln des Wickelgutes von der Spule wirken entsprechende Kräfte auch auf die Nabe der Spule. Um ein Zusammendrücken der doppelwandigen Nabe und eine daraus resultierende Beschädigung des dielektrischen Bereichs bzw. des Transponders zu verhindern, ist es vorteilhaft, wenn die teilkreisförmigen Schalen jeweils auf ihrer zur Nabe weisenden Innenumfangsfläche mindestens ein Abstandselement aufweisen. Alternativ hierzu ist es auch möglich, dass die Nabe auf ihrer zu den teilkreisförmigen Schalen weisenden Außenumfangsoberfläche mindestens ein Abstandselement aufweist.

In einer vorteilhaften Ausführung ist das Abstandselement durch wenigstens eine in Umfangsrichtung der Nabe umlaufende Rippe gebildet ist. Selbstverständlich ist es auch möglich, dass zwei oder mehrere axial zueinander beabstandete parallel nebeneinander angeordnete sowie in Umfangsrichtung der Nabe umlaufende Rippen vorgesehen sind. Solche Rippen sind einfach herzustellende, aber sehr wirksame Konstruktionselemente. Sie lassen sich vor allem bei der Verwendung von Kunststoffen sehr leicht durch Gießen oder Spritzen fertigen.

In einer weiteren vorteilhaften Ausführung sind die teilkreisförmigen Schalen durch zwei vorzugsweise identische Halbschalen gebildet. Diese beiden Halbschalen lassen sich in einem einfachen Prozess automatisiert an der Nabe anbringen.

Sind die Halbschalen identisch ausgebildet, vereinfacht sich die Vorrichtung zur automatisierten Befestigung durch die Verwendung gleicher Werkzeuge. Durch die Verringerung der Zahl verschiedenen Teile können zusätzlich die Produktionskosten gesenkt werden.

Um ein unbeabsichtigtes oder manipulatives Verändern oder Entfernen beispielsweise des Transponders zu verhindern, ist es vorteilhaft, wenn die teilkreisförmigen Schalen unlösbar miteinander verbunden sind. Sind andererseits die teilkreisförmigen Schalen lösbar miteinander verbunden, kann eine Spule durch Austausch des Transponders bei Defekt oder bei Wechsel des Wickelgutes weiter verwendet werden.

Um weitere Kosten zu sparen, kann vorgesehen sein, dass die teilkreisförmigen Schalen aus dem gleichen Material wie die Nabe hergestellt sind. Durch die Wahl des gleichen Materials werden auch schädliche Einflüsse durch unterschiedliche Materialeigenschaften verhindert, wie beispielsweise Rissbildung oder Spannungen bei unterschiedlicher Wärmedehnung.

Kunststoff hat sich aufgrund seiner Vielfalt als Werkstoff in der Konstruktion bewährt. Er ist im Vergleich zu den meisten Metallen leicht und einfach zu verarbeiten. Auch weist er eine für vielen Anwendungen genügende Festigkeit auf. Deshalb ist es der Spulenkörper in einer weiter bevorzugten Ausführung aus Kunststoff hergestellt.

Ist der Transponder ein RFID-Etikett, wird hierdurch in vorteilhafter Weise eine kontaktlose Informationsübertragung möglich. Verschleiß durch sich berührende Teile wird damit ausgeschlossen. Weiterhin kann die Leseeinrichtung für das RFID-Etikett an beliebiger Stelle angebracht werden, solange sie sich nur in Empfangsreichweite des RFID-Etikett befindet.

Um eine kontrollierte Rotation der Spule zu garantieren, sollte die Nabe auf ihrer zur Nabenachse weisenden Innenumfangsfläche mit wenigstens einem Drehmomentübertragungselement versehen sein. Das Abwickeln des Wickelgutes von der Spule erfolgt üblicherweise durch die Abzugskraft der Wickelgutzuführeinrichtung ohne einen Antrieb der Spule. Um ein unbeabsichtigtes Abwickeln des Wickelgutvorrats durch auftretende Schwungkräfte zu verhindern, kann über die Drehmomentübertragungselemente ein entsprechendes Bremsmoment auf die Spule übertragen werden.

Wenn der Spulenkörper aus zwei in einer die Nabenachse schneidenden Ebene miteinander verbindbaren Halbelementen gebildet ist, können diese durch einen einfachen Schweiß- oder Klebeprozess miteinander verbunden werden. So wird eine aufwendige Gestaltung der Guss- oder Spritzform vermieden. Weitere Kosten lassen sich durch die Verringerung der Zahl verschiedener Teile einsparen, wenn die Halbelemente identisch ausgebildet sind. Selbstverständlich kann die Spule auch einstückig in einem einzigen Spritzvorgang hergestellt werden.

Weitere vorteilhafte Ausgestaltungen sowie Ausführungsbeispiele der Erfindung werden nachstehend im Zusammenhang mit der Beschreibung einer Ausführungsform und in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Es zeigen:
- Fig. 1: eine perspektivische Ansicht eines ersten Ausführungsbeispiels der erfindungsgemäßen Spule;
- Fig. 2: eine Schnittdarstellung der Spule entsprechend Fig. 1 in einer Ebene durch die Drehachse;
- Fig. 3: eine Draufsicht auf die in den Fig. 1 und 2 gezeigten Spule;
- Fig.4: eine Schnittdarstellung eines zweiten Ausführungsbeispiels der erfindungsgemäßen Spule in einer Ebene durch die Drehachse; und
- Fig. 5: eine perspektivische Ansicht einer Halbschale entsprechend dem Ausführungsbeispiel nach Fig. 4.

Die nachstehend beschriebenen Ausführungsbeispiele der erfindungsgemäßen Spule zum Speichern und Abgeben eines auf der Spule aufgewickelten Wickelgutes kommen bei einer Clipmaschine, insbesondere einer Wurstclipmaschine, der eingangs genannten Art zum Einsatz. Bei dem Wickelgut handelt es sich um einen Clipstrang aus Metall. Die erfindungsgemäße Spule wird dabei auf eine Aufnahme der jeweiligen Maschine aufgeschoben, auf der sie sowohl drehfest als auch axial fest, aber wieder lösbar angeordnet wird. Die Aufnahme kann dabei aus einem Kunststoff oder einem metallischen Material hergestellt sein. Für beide Ausführungsformen einer derartigen Maschinenaufnahme für die Spule sind nachstehend Lösungsvorschläge angegeben.

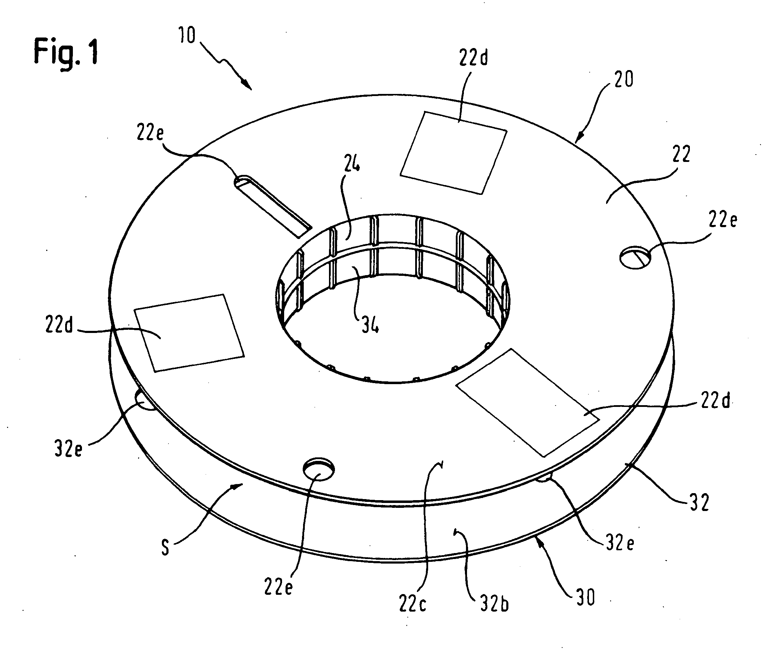

Fig. 1 zeigt ein Ausführungsbeispiel der erfindungsgemäßen Spule 10, die einen Spulenkörper aufweist. Der Spulenkörper 10 besitzt zwei kreisringförmige Wandelemente 22, 32, welche die seitlichen Begrenzungsflächen eines nachstehend noch näher erläuterten Speicherraums S der Spule bilden.

Zwischen den beiden Wandelementen 22, 32 erstreckt sich die Nabe 50. Beide Wandelemente 22, 32 umschließen eine kreisförmige und koaxial zu der Mittenachse der Wandelemente 22, 32 angeordnete Durchgangsdurchbrechung 22a, 32a, die dem Nabeninnendurchmesser entspricht. Der Außendurchmesser der beiden Wandelemente 22, 32 sowie der Innendurchmesser der beiden Durchgangsdurchbrechungen 22a, 32a sind zumindest annährend identisch. Der von der Außenumfangsfläche 50a der Nabe 50 und den zueinander weisenden Flächen 22b, 32b der Wandelemente 22, 32 umschlossene Raum bildet den bereits vorstehend angesprochenen Speicherraum S für das Wickelgut.

Auf der Innenumfangsfläche 50b der Nabe 50, d.h. der zu der nicht näher dargestellten Maschinenaufnahme bzw. Welle für die Spule weisenden Fläche 50b der Nabe 50 sind Mitnehmer 52 vorzugsweise einstückig angeformt. Diese Mitnehmer 52, die vorzugsweise einen quadratischen Querschnitt aufweisen, verlaufen in axialer Richtung, also parallel zur Dreh- bzw. Nabenachse A der Spule. Sie sind entsprechend Fig. 1 in Umfangsrichtung in gleichmäßigen Abständen auf der Innenumfangsfläche 50b der Nabe 50 verteilt. Die Mitnehmer 52 dienen der formschlüssigen Verbindung des Spulenkörpers 10 mit der nicht dargestellten Aufnahmewelle der Clipmaschine, auf der die Spule im Betrieb dreh- und axialfest, aber lösbar befestigt ist. Die Mitnehmer 52 stellen ein kontrolliertes und schlupffreies Drehen der Spule mit der Welle sicher. Selbstverständlich weist die Welle hierzu der Anzahl und Form der Mitnehmer 52 entsprechende Ausnehmungen auf.

Sofern die Spule nicht über die Aufnahmewelle der jeweiligen Maschine angetrieben wird, sondern die Drehbewegung der Spule Resultat des Abziehens des Wickelgutes von der Spule ist, dienen die Mitnehmer 52 nicht für die Übertragung eines Antriebsdrehmoments auf die Spule bzw. den Spulenkörper 10, sondern zur Übertragung eines Bremsmoments auf die Spule. Insbesondere soll hierdurch erreicht werden, dass bei einem Abziehen des Wickelgutes ein Weiterdrehen der Spule verhindert wird, so dass der Spulenkörper 10 bzw, die Spule immer eine definierte Position einnimmt.

Weiterhin weist die Innenumfangsfläche 50b einen in Umfangsrichtung umlaufenden und in der axialen Mitte der Innenumfangsfläche 50b angeordneten Wulst 40 auf, der zur axialen Sicherung der Spule bzw. des Spulenkörpers 10 auf der Aufnahme der jeweiligen Maschine dient. Die axiale Sicherung kann dabei durch federbelastete Rastelemente erfolgen, die beim axialen Aufschieben der Spule auf die Aufnahme der Maschine durch den Wulst 40 zur Seite bzw. radial nach innen gedrückt werden und nach einem Darüber-Hinweg-Fahren des Wulstes 40 wieder radial nach außen durch die Feder verschoben werden. Hierdurch wird dann, wie erwähnt, die Spule axial fest auf der Aufnahmewelle der Maschine angeordnet.

Wie ebenfalls aus Fig. 1 zu ersehen ist, weist zumindest eine Außenseite 22c der beiden Wandelemente 22, 32 über den Umfang gleichmäßig verteilte Etikettierbereiche 22d auf. Diese können beispielsweise zur Aufnahme von mit dem bloßen Auge lesbare Aufkleber und/oder zur Anformung von Herstellerkennzeichen dienen.

Die ebenfalls dargestellten Durchgangsdurchbrechungen 22e, 32e in den Wandelementen 22, 32 sind zum einen über diese verteilte Bohrungen oder zum anderen radial verlaufende Langlöcher. Die Langlöcher dienen dabei zur Füllstandskontrolle des Wickelgutes. Dem gegenüber dienen die runden Durchgangsbohrungen dazu, das freie Ende des Wickelgutes bei einem nicht vollständigen Verbrauch und bei einem Abnehmen der Spule von der Maschinenaufnahme sicher fixieren zu können. Hierzu wird das freie Ende des Wickelgutes, beispielsweise eines Wickelstranges durch die Bohrung hindurch gesteckt. Hierbei ist noch anzumerken, dass das Ende des Wickelgutes, welches der Außenumfangsfläche 50a der Nabe 50 nahe ist, auf der Nabe 50 fixiert sein kann.

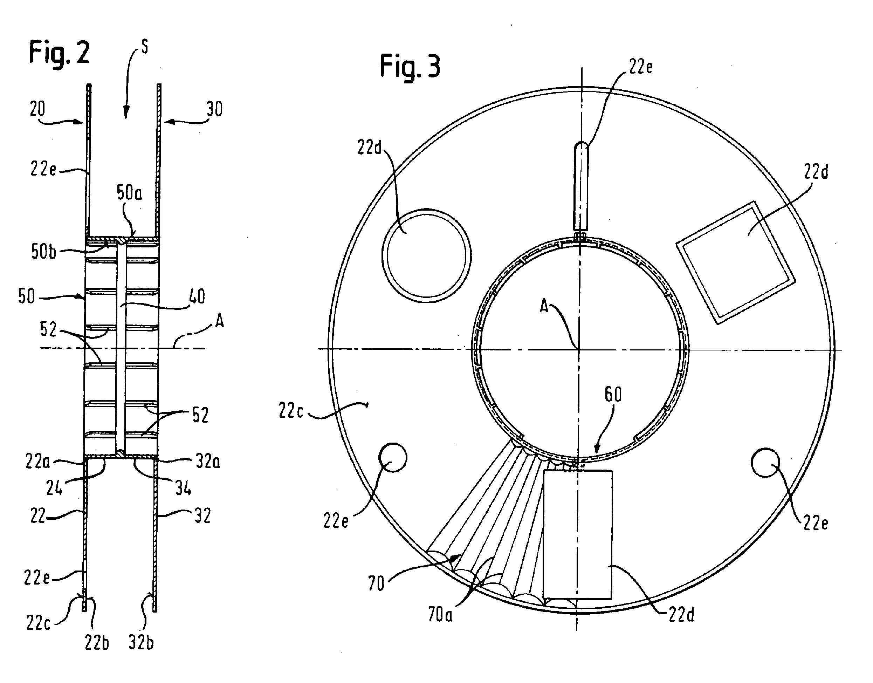

Auf der Spule gemäß dem ersten Ausführungsbeispiel ist der dielektrische Bereich zur Anbringung des Transponders durch eine Ausnehmung 60, welche sich an der Innenumfangsfläche 50b der Nabe 50 befindet, wie dies aus Fig. 3 ersichtlich ist, gebildet. Die Ausnehmung 60 besitzt dabei eine Flächengröße, die geringfügig größer ist, als die Außenabmessungen des Transponders. Weiterhin besitzt die Ausnehmung 60 eine radiale Tiefe, die mindestens der Höhe bzw. Stärke des flächigen Transponders entspricht. Zur Anbringung kann der Transponder mit einer Klebeschicht versehen sein, mittels der er an der nach radial innen weisenden Bodenfläche der Ausnehmung 60 angebracht sein kann. Diese erste Ausführungsform ist insbesondere dann vorteilhaft, wenn die Maschinenaufnahme für die Spule aus einem nicht-metallischen Werkstoff, insbesondere einem Kunststoff hergestellt ist. Da der Kunststoff keinen Einfluss auf die Funktionsweise des Transponders hat, wird durch die Ausnehmung 60 der Transponder vor Einflüssen, die durch beispielsweise ein metallisches Wickelgut entstehen können, geschützt. Nachstehend wird im Zusammenhang mit den zweiten Ausführungsbeispiel eine Ausführungsform geschildert, die insbesondere dann vorteilhaft ist, wenn die Spulenaufnahme der Maschine aus einem metallischen Werkstoff hergestellt ist und das Wickelgut selbst wiederum einen metallischen Werkstoff verwendet.

In der in der Fig. 3 gezeigten Draufsicht der Spule 10 entsprechend den Fig. 1 und 2 ist neben den bekannten Elementen der Spule 10 ein Bereich 70 dargestellt. Er zeigt radial auf der Außenfläche der Wandelemente 22, 32 verlaufende Kanten 70a. Diese bilden eine wellenförmige Profilierung zur Verbesserung der Stabilität der Wandelemente 22, 32. Durch die Profilierung kann weiterhin die Materialdicke der Wandelemente 22, 32 reduziert werden. Der Bereich 70 ist hier nur beispielhaft als Abschnitt auf der Außenfläche 22c, 32c der Wandelemente 22, 32 dargestellt und kann sich natürlich über die gesamte Außenfläche 22c, 32c der Wandelemente 22, 32 erstrecken. Die weiteren Etikettierbereiche 22d sind ebenfalls ohne die Profilierung 70 als ebene Flächen ausgebildet.

Neben der vorstehend geschilderten einstückigen Ausgestaltung des Spulenkörpers 10 besteht grundsätzlich auch die Möglichkeit, den Spulenkörper 10 aus zwei identischen Halbelementen herzustellen. Diese beiden Halbelemente können mittels beispielsweise eines Schweißvorganges in der Weise miteinander verbunden werden, dass die Schweißnaht entlang des Wulstes 40 verläuft.

Das RFID-Etikett enthält einen Abschnitt in dem berührungslos elektromagnetisch auslesbare RF-Informationen gespeichert werden können. In dem Abschnitt kann eine Information über den auf der Spule befindlichen Clip codiert sein. Zusätzlich kann noch ein bedruckbarer Bereich auf dem Etikett für vom Menschen mit bloßen Auge lesbare Information vorgesehen sein, so dass die Clipgrößeninformation bei Beschädigung der automatisch auslesbaren Etikettabschnitte oder bei Versagen der Leseeinheit manuell eingegeben werden kann.

Das Etikett ist entsprechend mittels verschiedener Sensoreinrichtungen auslesbar. Die Clipmaschine, in der die erfindungsgemäße Spule einsetzbar ist, weist zum Auslesen in der Nähe der Clipspule eine Sensoreinrichtung in Form einer Leseeinheit auf, welche zum Auslesen des RFID-Etiketts geeignet ist. Die Mittel zum Auslesen der Informationen des RFID-Etiketts weisen in bekannter Weise eine Send- und Empfangsantenne sowie eine Sende- und Empfangselektronik auf, mit welcher der Transponder des Etiketts angeregt werden kann.

Zum Auslesen des RFID-Etiketts, welches je nach Winkelstellung der Spule an unterschiedlicher Position angeordnet sein kann, kann es notwendig sein, dass die Spule zunächst in eine Lesestellung gedreht und/oder an der in der Regel ortsfesten Leseeinheit vorbeigeführt werden muss. Dies kann mittels eines Steuerprogramms automatisch nach Einsetzen eines neuen Clipvorrats geschehen.

Die auf diese Weise ausgelesene Kennung wird von der Leseeinheit in Form eines Clipinformationssignal einer Steuerung, genauer einer Auswerteeinrichtung zugeführt.

Auch die wechselbaren Verschließwerkzeuge weisen eine Kennung in Form eines WerkzeugEtiketts auf. Im Bereich der Ausgangs- oder Öffnungsstellung beispielsweise des ersten Verschließwerkzeugs kann eine Sensoreinrichtung in Form einer Leseeinheit zum Auslesen des WerkzeugEtiketts angeordnet sein.

Auch das Werkzeugetikett kann beispielsweise einen vom Menschen mit bloßen Auge lesbaren Abschnitt einschließen.

Das von der Leseeinheit auf diese Weise aus der Kennung des Verschließwerkzeugs ermittelte Clipinformationssignal wird der Auswerteeinrichtung ebenfalls über eine Signalleitung zugeführt. Die Auswerteeinrichtung wertet das Clipinformationssignal und das Verschließwerkzeuginformationssignal beispielsweise anhand eines tabellarischen Vergleichs aus. Ergibt der Vergleich, dass der verwendete Clip und das eingesetzte Verschließwerkzeug kompatibel sind, so gibt die Auswerteeinrichtung innerhalb der Steuerung ein Kompatibilitätssignal zur weiteren Verwendung aus.

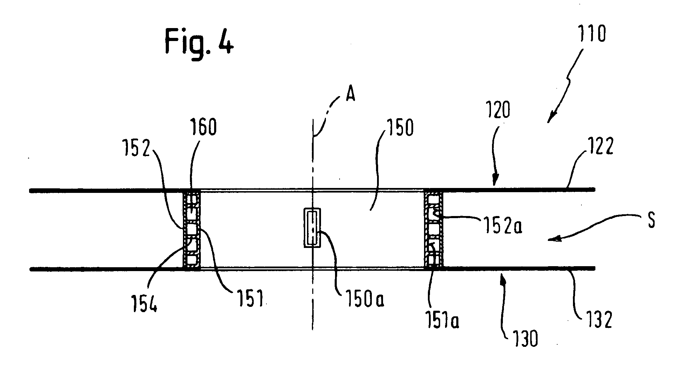

Fig. 4 zeigt die Schnittdarstellung eines weiteren Ausführungsbeispiels der erfindungsgemäßen Spule in einer Vertikalebene durch die Dreh- bzw. Nabenachse A. Bei der nachstehenden Beschreibung des zweiten Ausführungsbeispiels der Erfindung werden für funktions- und/oder geometrischgleiche Bauteile die gleichen Bezugszeichen wie bei dem ersten Ausführungsbeispiel gemäß den Fig. 1 bis 3, jeweils um 100 erhöht, verwendet.

Auch in diesem Ausführungsbeispiel besteht der einteilige Spulenkörper 110 aus den Wandelementen 122, 132 sowie der Nabe 150, die den Speicherraum S für das Wickelgut bilden.

Wie aber bereits in Bezug auf das erste Ausführungsbeispiel beschrieben, kann auch die Spule in einem einzigen Spritzvorgang als einteilige Spule hergestellt werden.

Die Spule besitzt im Gegensatz zu dem ersten Ausführungsbeispiel entsprechend Fig. 1 bis 3 als dielektrischen Bereich 160 eine doppelwandig ausgeführte Nabe 150. Die doppelwandige Nabe 150 weist eine zu der Dreh- bzw. Nabenachse A nähere erste Nabenwand 151 sowie eine in radialer Richtung von der Dreh- bzw. Nabenachse A entfernter liegende zweite Nabenwand 152 auf, die zu der ersten Nabenwand 151 einen radialen Abstand besitzt. Die zweite Nabenwandung 152 erstreckt sich senkrecht zwischen den Wandelementen 122, 132 der Spule und ist koaxial zur Drehachse A angeordnet.

Zur Erhöhung der Stabilität der doppelwandigen Nabe 150 sind in dem Hohlraum zwischen der ersten und zweiten Nabenwandung 151, 152 Rippen 154 angeordnet, um auch bei Belastungen den Abstand der Nabenwandungen 151, 152 konstant zu halten. Die Rippen 154 können sich radial von der Außenumfangsfläche 152a der ersten Nabenwandung 151 bis zur Innenumfangsfläche 152a der zweiten Nabenwandung 152 erstrecken und besitzen vorzugsweise einen quadratischen Querschnitt. Dabei verlaufen die Rippen 154 zwischen den Wandelementen 122, 132 um den gesamten Nabenumfang herum und sind parallel sowie in axialer Richtung mit gleichmäßigem Abstand zueinander angeordnet. Neben der vorstehend geschilderten einstückigen Anordnung der Rippen 154 an der Außenumfangsfläche 151a der ersten Nabenwandung 151 können die Rippen 154 auch an der Innenumfangsfläche 152a der zweiten Nabenwandung 152 einstückig angeformt werden. Da diese zweite Ausführungsform der erfindungsgemäßen Spule von dem Spulenkörper 10 des ersten Ausführungsbeispiels gemäß den Fig. 1 bis 3 ausgehen kann und dort keine Rippen an der Außenumfangsfläche der Nabe 50 vorgesehen sind, unterstützt die Lösung, bei der die Rippen 154 an der Innenumfangsfläche 152a der zweiten Nabenwandung 152 angebracht sind, die Verwendung des aus dem ersten Ausführungsbeispiel bekannten Spulenkörpers 10.

Auf der Außenumfangsfläche 151a der ersten Nabenwand 151 ist weiterhin eine Materialverdickung 150a zu erkennen. Diese erstreckt sich von der Außenumfangsfläche 151a der ersten Nabenwandung 151 radial in Richtung der zweiten Nabenwandung 152 mit einem, wie dargestellt, annähernd rechteckigen Querschnitt. Die radiale Höhe der Materialverdickung entspricht dabei maximal der Höhe der Rippen 154, um nicht in die zweite Nabenwandung 152 hinein zu ragen.

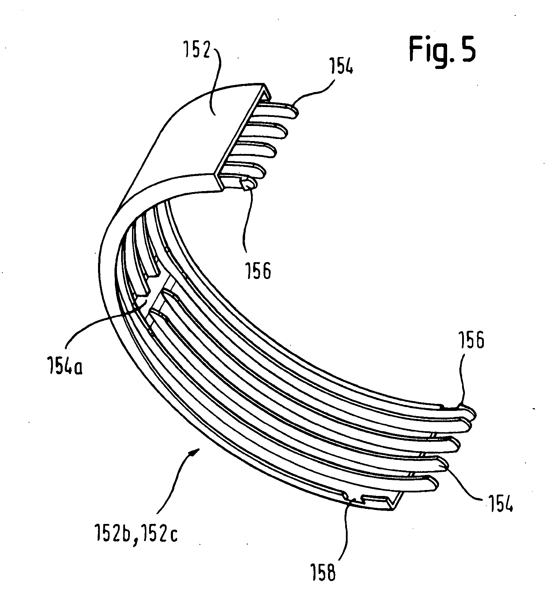

Die Doppelwandigkeit der Nabe 150 bzw. die in radialer Richtung weiter außen liegende zweite Nabenwand 152 wird durch zwei Halbschalen 152b, 152c gebildet. Fig. 5 zeigt die perspektivische Ansicht einer Halbschale 152b, 152c, wobei beide Halbschalen 152b, 152c identisch aufgebaut sind. Daher wird nachstehend in Fig. 5 nur eine der beiden Halbschalen 152b, 152c näher erläutert.

Die Halbschale 152b ist halbkreisförmig gestaltet und umschließt einen Winkel von zumindest annähernd 180°. Ihre Breite entspricht dem lichten bzw. axialen Abstand der Wandelemente 122, 132 der Spule. Der Innenradius der Halbschale 152b ist gleich dem Außenradius der Nabe 150, wogegen ihr Außenradius um die Höhe der Rippen 154 und der Stärke der zweiten Nabenwandung 152 größer ist als der Außenradius der ersten Nabenwand 151a. Die Rippen 154 verlaufen radial ausgerichtet auf der Innenumfangsfläche 152a der zweiten Nabenwandung 152 und ragen in Umfangsrichtung um eine bestimmte Länge über diese hinweg.

Die äußeren der parallel zueinander ausgerichteten Rippen 154 weisen auf einer Seite ein Rastelement 156 auf, das mit dem Gegenrastelement 158 korrespondiert. Das Rastelement 156 ist durch einen Haken an dem über die zweite Nabenwandung 152 in Umfangsrichtung hinausragende Rippe 154 gebildet. Das Gegenrastelement 158 befindet sich am entsprechend gegenüberliegenden Ende der Rippe 154, das nicht über die zweite Nabenwandung 152 in Umfangsrichtung hinausragt. Das Gegenrastelement 158 ist durch eine Ausnehmung in der Rippe 154 gebildet, die mit dem durch einen Haken gebildeten Rastelement 156 korrespondiert, sodass dieser in die Ausnehmung 156 eingreifen kann.

Wie aus Fig. 5 zu erkennen ist, werden zur Erzeugung der Doppelwandigkeit zwei Halbschalen 152b, 152c die spiegelverkehrt zueinander ausgerichtet sind, um die erste Nabenwandung 151 gelegt und durch die Rast- und Gegenrastelemente 156, 158 vorzugsweise lösbar miteinander verbunden.

In Fig. 5 ist weiterhin zu sehen, dass einige Rippen 154 eine Ausnehmung bzw. Unterbrechung 154a aufweisen. Die dargestellte Ausnehmung entspricht der Größe der Materialverdickung 150a der Nabe 150 in Fig. 4. Die Ausnehmung 154a und die Materialverdickung 150a sind so aufeinander abgestimmt, dass sie im montierten Zustand der Halbschalen 152b, 152c ineinander greifen und so eine Verdrehsicherung für die Halbschalen 152b, 152c auf der ersten Nabenwandung 151 bilden.

Im Gegensatz zum ersten Ausführungsbeispiel entsprechend den Fig. 1 bis 3 wird der Transponder bzw. das RFID-Etikett in der zweiten Ausführung der Spule im Zwischenraum zwischen den Nabenwandungen 151, 152 angeordnet. Der dielektrische Bereich 160 wird dabei durch die zweite Nabenwandung 152 gebildet und schützt das RFID-Etikett in gleicher Weise, wie die Nabe 50 des ersten Ausführungsbeispiels vor den Einflüssen metallischer Gegenstände im Bereich des Etiketts beim Auslesen der auf ihm gespeicherten Informationen.

Der dielektrische Bereich 160 kann dabei sowohl an der Innenumfangsfläche 152a der zweiten Nabenwandung als auch an der Außenumfangsfläche 151a der ersten Nabenwandung 151 vorgesehen sein. Um den Transponder bzw. das RFID-Etikett anbringen zu können, kann dabei jeweils eine nicht weiter dargestellte Ausnehmung in den Nabenwandungen 151, 152 vorgesehen sein. Insbesondere in dem Fall, bei dem der Transponder auf derjenigen Innen- bzw. Außenumfangsfläche der ersten bzw. zweiten Nabenwandung 151, 152 angeordnet werden soll, bei der die Rippen 154 einstückig angeformt sind, kann eine derartige Ausnehmung vorgesehen sein. Diese kann die Ausgestaltung besitzen, wie sie für die Ausnehmung 154a für die Verdrehsicherung zwischen den beiden aufgesetzten Halbschalen 152b, 152c der zweiten Nabenwandung 152 und der ersten Nabenwandung 151 vorgesehen ist. Ebenso besteht die Möglichkeit, den Transponder auf einem durchgehend eben bzw. glatt ausgebildeten Bereich der Außenumfangsfläche 151 a der ersten Nabenwandung oder der Innenumfangsfläche 152a der zweiten Nabenwandung anzuordnen. Schließlich ist es möglich, einen nur geringfügig sich aus der Ebene der jeweiligen Fläche erhebenden Rahmen, dessen Außenkontur der des Transponders entspricht, anzuformen.

Es ist noch anzumerken, däss bei einer Anordnung des Transponders an der Außenumfangsfläche 151a der ersten Nabenwandung 151 oder der Innenumfangsfläche 152a der zweiten Nabenwandung 152 auch eine nach radial außen bzw. radial innen abstehende, nicht weiter dargestellte Erhebung vorgesehen sein kann, auf die der Transponder angeordnet werden kann. Diese Erhebung dient dazu, den radialen Abstand von einem metallischen Gegenstand, sei es die Spulenaufnahme der Maschine, an der die Spule verwendet wird, sei es das Wickelgut, welches auf der Spule aufgewickelt ist, oder beides, zu vergrößern. Die radiale Höhe dieser Erhebung richtet sich dabei nach den jeweiligen Anforderungen, wobei sie um das Maß der radialen Höhe des Transponders kleiner ist als der radiale Abstand zwischen der Außenumfangsfläche 151a der ersten Nabenwandung und der Innenumfangsfläche 152a der zweiten Nabenwandung.

Die zweite Ausführung der erfindungsgemäßen Spule wird, wie auch die Spule gemäß der ersten Ausführungsform, in der oben beschriebenen Weise in einer Clipmaschine eingesetzt, die in der Lage ist, die in dem RFID-Etikett gespeicherten Informationen auszulesen und mit beispielsweise den Verschließwerkzeuginformationen zu vergleichen und entsprechende Signale an eine Steuerung auszugeben.

Ein Vorteil, das Etikett innerhalb der doppelwandigen Nabe 150 der Spule anzubringen, ist, dass das RFID-Etikett vor Beschädigungen durch Transport oder bewegte Maschinenteile geschützt ist. Ein weiterer Vorteil ist der Schutz vor Manipulation oder Verlust.

Dabei können die Halbschalen 152b, 152c, wie dargestellt, durch Rastelemente 156, 158 lösbar miteinander verbunden sein. Sie können aber auch, beispielsweise durch eine Schweißung, unlösbar miteinander verbunden sein.

Das RFID-Etikett kann, wie bereits erwähnt, selbstverständlich auch auf der Innenseite der Halbschalen 152b, 152c angebracht werden. Eine weiter verbesserte Abschirmung durch den dielektrischen Bereich 160 kann dann durch Erhöhung der Materialdicke der zweiten Nabenwandung 152 erreicht werden.

Weiterhin können, auch wenn hier nicht dargestellt, im zweiten Ausführungsbeispiel der Spule ebenfalls Mitnehmer 52 entsprechend dem ersten Ausführungsbeispiel der Spule vorgesehen sein, um ein schlupffreies Drehen der Spule auf einer entsprechend gestalteten Welle zu gewährleisten.

Die Anzahl der Mitnehmer 52 kann ebenfalls beliebig gewählt werde. Im einfachsten Fall würde ein Mitnehmer genügen, um ein schlupffreies Drehen der Spule zu gewährleisten.

Für die Spule mit der doppelwandigen Nabe besteht neben der vorstehend geschilderten Lösung, den Spulenkörper 10 gemäß dem ersten Ausführungsbeispiel zu verwenden und teilkreisförmige Schalenelemente 152b, 152c auf der Außenumfangsfläche 151a der ersten Nabenwandung 151, die der Außenumfangsfläche 50a der Nabe 50 des Spulenkörpers 10 gemäß dem ersten Ausführungsbeispiel entspricht, aufzusetzen, die Möglichkeit, den Spulenkörper 110 der Spule gemäß dem zweiten Ausführungsbeispiel durch zwei identische, nicht weiter dargestellte Halbelemente zu bilden. Diese beiden Halbelemente sind in einer Vertikalebene, die die Dreh- bzw. Nabenachse A in einem Winkel von 90° schneidet, miteinander, beispielsweise durch einen Schweißvorgang, verbindbar. In diesem Fall ist die ersten Nabenwandung 151 und die zweite Nabenwandung 152 einstückig fest mit der jeweiligen Seitenwand 122 bzw. 132 verbunden. Weiterhin ist bei diesem Ausführungsbeispiel es nicht notwendig, die Rippen 154 vorzusehen, da, wie bereits eben ausgeführt, die beiden Nabenwandungen 151, 152 jeweils einstückig mit der jeweiligen Seitenwand 122, 132 verbunden sind.

Der Transponder kann, wie bereits erwähnt, ein RFID-Etikett sein. Um zu vermeiden, dass der Transponder sich von dem dielektrischen Bereich 60; 160 löst, ist es vorteilhaft, wenn er an einer seiner flächigen Seiten mit einem Kleber versehen ist. Dieser Kleber kann vor dem Aufbringen des Transponders durch eine Schutzfolie geschützt sein. Selbstverständlich können aber auch andere Befestigungsmethoden für die Anbringung des Transponders bei der Spule gemäß dem ersten Ausführungsbeispiel, das in den Fig. 1 bis 3 gezeigt worden ist, oder gemäß dem zweiten Ausführungsbeispiel, das in den Fig. 4 und 5 gezeigt worden ist, verwendet werden.

## Patentansprüche

1. Spule zum Speichern und Abgeben eines auf der Spule aufgewickelten Wickelgutes, insbesondere eines Clipstrangs, mit einem Spulenkörper (110), der eine Nabe (150) mit einer Drehachse (A) und an den axialen Stirnenden der Nabe (150) jeweils angeordnete Seitenwände (122, 132) aufweist, die über die Außenumfangsoberfläche der Nabe (150) in radialer Richtung überstehen, wobei der von den zueinander weisenden Flächen der Seitenwände (122, 132) und der Nabe (150) definierte und um die Nabe (150) umlaufende Speicherraum (S) zur Aufnahme des Wickelgutes dient, wobei
der Spulenkörper (110) an einer von dem Speicherraum (S) für das Wickelgut wegweisenden Fläche der Nabe (150) wenigstens einen dielektrischen Bereich (160) zur Aufnahme mindestens eines Transponders aufweist,
**dadurch gekennzeichnet, dass** die Nabe (150) zur Ausbildung des dielektrischen Bereichs (160) doppelwandig in der Weise ausgebildet ist, dass die doppelwandige Nabe (150) eine erste, der Drehachse (A) der Nabe (150) nähere Nabenwand (151) und eine von der Drehachse (A) der Nabe (150) in radialer Richtung entferntere und zur Nabenwand (151) beabstandete zweite Nabenwand (152) aufweist, welche durch teilkreisförmige Schalen (152a, 152b) gebildet ist, die die erste Nabenwand (150) zumindest annährend vollständig umschließen.

2. Spule nach Anspruch 1,
**dadurch gekennzeichnet, dass** der mindestens eine dielektrische Bereich durch eine an der von dem Wickelgut wegweisenden Fläche der Nabe (150) vorgesehenen Ausnehmung (60) gebildet ist.

3. Spule nach Anspruch 1,
**dadurch gekennzeichnet, dass** die teilkreisförmigen Schalen (152a, 152b) jeweils auf ihrer zur Nabe (150) weisenden Innenumfangsfläche mindestens ein Abstandselement (154) aufweisen.

4. Spule nach Anspruch 1,
**dadurch gekennzeichnet, dass** die Nabe (150) auf ihrer zu den teilkreisförmigen Schalen (152a, 152b) weisenden Außenumfangsoberfläche mindestens ein Abstandselement (154) aufweist.

5. Spule nach Anspruch 3 oder 4,
**dadurch gekennzeichnet, dass** das Abstandselement (154) durch wenigstens eine in Umfangsrichtung der Nabe (150) umlaufende Rippe (154) gebildet ist.

6. Spule nach einem der Ansprüche 1 bis 5,
**dadurch gekennzeichnet, dass** die teilkreisförmigen Schalen (152a, 152b) durch zwei Halbschalen (152a, 152b) gebildet sind.

7. Spule nach einem der Ansprüche 1 bis 6,
**dadurch gekennzeichnet, dass** die teilkreisförmigen Schalen (152a, 152b) miteinander verbindbar sind.

8. Spule nach einem der Ansprüche 1 bis 7,
**dadurch gekennzeichnet, dass** der Spulenkörper (110) aus Kunststoff hergestellt ist.

9. Spule nach einem der Ansprüche 1 bis 8,
**dadurch gekennzeichnet, dass** der Transponder ein RFID-Etikett ist.

10. Spule nach einem der Ansprüche 1 bis 9,
**dadurch gekennzeichnet, dass** die Nabe (150) auf ihrer zur Nabenachse (A) weisenden Innenumfangsfläche mit wenigstens einem Drehmomentübertragungselement (52) versehen ist.

11. Spule nach einem der Ansprüche 1 bis 10,
**dadurch gekennzeichnet, dass** der Spulenkörper (110) aus zwei in einer die Nabenachse (A) schneidenden Ebene miteinander verbindbaren Halbelementen (20, 30; 120, 130) gebildet ist.

12. Spule nach Anspruch 11,
**dadurch gekennzeichnet, dass** die Halbelemente (120, 130) identisch ausgebildet sind.

13. Spule nach einem der Ansprüche 1 bis 12,
**dadurch gekennzeichnet, dass** die Spule durch einen einzigen Spritzvorgang herstellbar ist.

## Claims

1. Reel for storing and dispensing a winding material, in particular a clip string, wound up on the reel, comprising a reel body (110) having a hub (150) with a rotation axis (A) and side walls (122, 132) respectively arranged at the axial end faces of the hub (150) and protruding in radial direction beyond the outer circumferential surface of the hub (150), wherein the storage space (S) which is defined by the surfaces of the side walls (122, 132) facing to each other and by the hub (150) and which is surrounding the hub (150) serves to receive the winding material, wherein
the reel body (110) has at least one dielectric region (160) at a surface of the hub (150) facing away from the storage space for the winding material for receiving at least one transponder,
**characterized in that** for forming the dielectric region (160) the hub (150) is double-walled in such a manner that the double-walled hub (150) has a first hub wall (151) arranged closer to the rotation axis (A) of the hub (150) and a second hub wall (152) arranged farther in radial direction from the rotation axis (A) of the hub (150) and spaced from the hub wall (151), which second hub wall (152) is formed by circular segment-shaped shells (152a, 152b) at least approximately completely surrounding the first hub wall (151).

2. Reel according to claim 1,
**characterized in that** the at least one dielectric region is formed by a recess (60) provided at the surface of the hub (150) facing away from the winding material.

3. Reel according to claim 1,
**characterized in that** each of the circular segment-shaped shells (152a, 152b) has on its inner circumferential surface facing to the hub (150) at least one distance element (154).

4. Reel according to claim 1,
**characterized in that** the hub (150) has on its outer circumferential surface facing to the circular segment-shaped shells (152a, 152b) at least on distance element (154).

5. Reel according to claim 3 or 4,
**characterized in that** the distance element (154) is formed by at least one ridge (154) surrounding the hub (150) in circumferential direction.

6. Reel according to one of the claims 1 to 5,
**characterized in that** the circular segment-shaped shells (152a, 152b) are formed by two half shells (152a, 152b).

7. Reel according to one of the claims 1 to 6,
**characterized in that** the circular segment-shaped shells (152a, 152b) are connectable to each other.

8. Reel according to one of the claims 1 to 7,
**characterized in that** the reel body (110) is made of plastics.

9. Reel according to one of the claims 1 to 8,
**characterized in that** the transponder is an RFID label.

10. Reel according to one of the claims 1 to 9,
**characterized in that** the hub (150) is provided at its inner circumferential surface facing to the hub axis (A) with at least one torque transmission element (52).

11. Reel according to one of the claims 1 to 10,
**characterized in that** the reel body (110) is formed by two half elements (20, 30; 120, 130) connectable to each other within a plane intersecting the hub axis (A).

12. Reel according to claim 11,
**characterized in that** the half elements (120, 130) are formed identical.

13. Reel according to one of the claims 1 to 12,
**characterized in that** the reel is adapted to be manufactured by a single casting operation.

## Revendications

1. Bobine de stockage et de distribution d'un produit à enrouler, en particulier d'une bande de clips, enroulé(e) sur ladite bobine, comprenant un corps de bobine (110) qui présente un moyeu (150) avec un axe de rotation (A) et des parois latérales (122, 132) qui sont disposées respectivement aux extrémités frontales axiales dudit moyeu (150) et qui dépassent la surface périphérique extérieure du moyeu (150) dans la direction radiale, l'espace de stockage (S) qui est défini par les surfaces des parois latérales (122, 132), lesquelles montrent les unes vers les autres, et par ledit moyeu (150) et qui s'étend autour du moyeu (150) servant à recevoir ledit produit à enrouler, ledit corps de bobine (110) comprenant - sur une surface du moyeu (150) qui montre dans la direction opposée audit espace de stockage (S) pour le produit à enrouler - au moins une zone diélectrique (160) de réception d'au moins un transpondeur,
**caractérisée par le fait que**, pour la réalisation de la zone diélectrique (160), ledit moyeu (150) est réalisé à double paroi de telle sorte que le moyeu (150) à double paroi présente une première paroi de moyeu (151) située plus près de l'axe de rotation (A) du moyeu (150) ainsi qu'une deuxième paroi de moyeu (152) qui est plus éloignée de l'axe de rotation (A) du moyeu (150) dans la direction radiale et espacée par rapport à ladite paroi de moyeu (151) et qui est formée par des coques (152a, 152b) en forme de cercle partiel entourant ladite première paroi de moyeu (151) d'une manière au moins approximativement complète.

2. Bobine selon la revendication 1, **caractérisée par le fait que** ladite au moins une zone diélectrique est formée par un évidement (60) prévu sur la surface du moyeu (150) qui montre dans la direction opposée au produit à enrouler.

3. Bobine selon la revendication 1, **caractérisée par le fait que** lesdites coques (152a, 152b) en forme de cercle partiel présentent au moins un élément d'écartement (154) respectivement sur leur surface périphérique intérieure montrant vers ledit moyeu (150).

4. Bobine selon la revendication 1, **caractérisée par le fait que** ledit moyeu (150) présente au moins un élément d'écartement (154) sur sa surface périphérique extérieure montrant vers lesdites coques (152a, 152b) en forme de cercle partiel.

5. Bobine selon la revendication 3 ou 4, **caractérisée par le fait que** ledit élément d'écartement (154) est formé par au moins une nervure (154) s'étendant autour dans la direction circonférentielle du moyeu (150).

6. Bobine selon l'une quelconque des revendications 1 à 5, **caractérisée par le fait que** lesdites coques (152a, 152b) en forme de cercle partiel sont constituées par deux demi-coques (152a, 152b).

7. Bobine selon l'une quelconque des revendications 1 à 6, **caractérisée par le fait que** lesdites coques (152a, 152b) en forme de cercle partiel peuvent être reliées entre elles.

8. Bobine selon l'une quelconque des revendications 1 à 7, **caractérisée par le fait que** ledit corps de bobine (110) est réalisé en matière plastique.

9. Bobine selon l'une quelconque des revendications 1 à 8, **caractérisée par le fait que** ledit transpondeur est une étiquette RFID.

10. Bobine selon l'une quelconque des revendications 1 à 9, **caractérisée par le fait que** la surface périphérique intérieure dudit moyeu (150), qui montre vers l'axe de moyeu (A), est pourvue d'au moins un élément de transmission de couple (52).

11. Bobine selon l'une quelconque des revendications 1 à 10, **caractérisée par le fait que** ledit corps de bobine (110) est constitué par deux demi-éléments (20, 30 ; 120, 130) aptes à être reliés entre eux dans un plan coupant ledit axe de moyeu (A).

12. Bobine selon la revendication 11, **caractérisée par le fait que** lesdits demi-éléments (120, 130) sont réalisés de façon identique.

13. Bobine selon l'une quelconque des revendications 1 à 12, **caractérisée par le fait que** ladite bobine peut être réalisée par une seule opération d'injection.
